# EUROPEAN PATENT APPLICATION

(11) **EP 0 935 179 A1**
(43) Date of publication of application: **11.08.1999**
(21) Application number: 98938951.5
(22) Date of filing: 24.08.1998
(51) Int. Cl.: G05B 19/42

(54) **NUMERIC CONTROLLER PROVIDED WITH TEACHING/PLAYBACK FUNCTION**

(30) Priority: 22.08.1997 JP 24028297
(71) Applicant: FANUC LTD, Minamitsuru-gun, Yamanashi 401-0597 (JP)
(72) Inventor: SHINOZAKI, Satoru, Shimodate-shi, Ibaraki 308-0811 (JP); NAGAYAMA, Susumu, Yamanashi 403-0005 (JP)
(74) Representative: Billington, Lawrence Emlyn
(86) International application number: JP9803735
(87) International publication number: WO9910790

(57) **Abstract**

The path of operation is divided automatically by detecting variation in the direction of operation of a machine and stored in time series in a buffer (1) as an NC program of one block (S25-S27, S33-S34). The selection of auxiliary function operations is detected in parallel with the storage (S8) and the commands of the detected auxiliary function operation are stored in the buffer (1) in time series (S21). If the selection of auxiliary function operations is detected when the operating direction is identical, the path of operation is divided automatically with reference to the mechanical position at the moment of selecting auxiliary function operations, the path of operation up to the moment of detecting the selection is stored in the buffer (1) as an NC program of one block, and the commands of auxiliary function operation are stored (S19-S21).

## Description

### TECHNICAL FIELD

This invention relates to the improvement of a numerical control device with teaching playback functions.

### RELATED ART

A numerical control device with teaching playback functions including a teaching function to store a move path taught through the numerical control device as a NC program in the numerical control device and a playback function to play back the taught move path under automatic control according to the NC program is known.

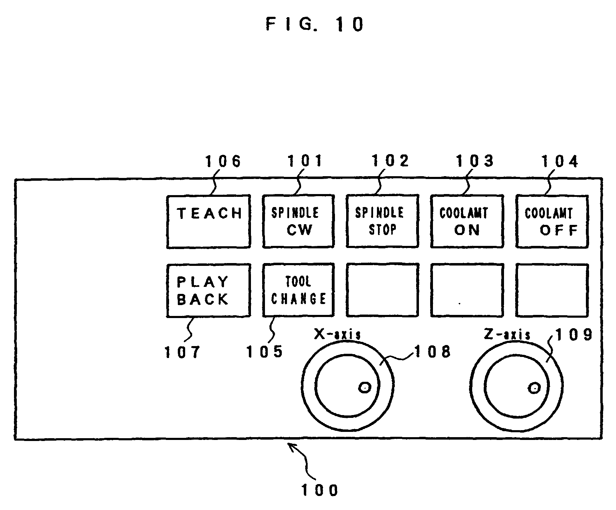

Fig. 10 shows an illustration of an operating panel of a conventional numerical control device with teaching playback functions. As shown in Fig. 10, an operating panel 100 is provided with various switches which will be described in the following.

A spindle switch 101 for the normal rotation of a spindle motor such as a lathe, a spindle stop switch 102 for the stop of the rotation of the spindle motor, a coolant switch 103 for the feed of lubricating coolant to a machining portion, a coolant stop switch 104 for the stop of the feed of lubricating coolant and a tool change switch 105 for the automatic exchange of a tool mounted on a tool rest or the like are provided as switches for actions irrelevant to the movement of a cutting tool, that is, miscellaneous functional actions and are selected irrespective of the move path of a machine.

Operating handles 108 and 109 are respectively connected to manual pulse generators for X-axis and Z-axis. The cutting tool mounted on the lathe or the like may be freely moved in a normal or reverse direction along an X-axis (a direction parallel to a shaft of a spindle) and a Z-axis (a direction orthogonal to the X-axis) by normally or reversely turning these handles 108 and 109 in a teaching mode by manual operation. In the case of the lathe, a locus of movement of the cutting tool is supposed to be the move path of the machine.

A teaching switch 106 serves as an operating means which causes the numerical control device to operate the move path for one block portion on the basis of the positions of a start point and an end point of the cutting tool moved by the operation of the operating handles 108 and 109, that is, the relation between the position of the cutting tool before handle operation and the current position of the cutting tool after handle operation and stores the operated move path as it is in a program memory on a block-by-block basis as a NC program.

A playback switch 107 serves as an operating means which causes the numerical control device to execute the above NC program stored in the program memory for playback of the taught action so that the taught movement is carried out again.

In general, in case of the teaching work for a machine tool such as a lathe, it is necessary to move a cutting tool while adjusting an amount of cut or the like in the process of practical machining with a work mounted on a spindle, and during this movement, as a matter of course, an ON/OFF operation of the spindle, an ON/OFF operation of the coolant and an exchange of the tool or the like are carried out.

As described above, it is possible to carry the teaching work into effect by operating the switches 101 to 105 for the miscellaneous functional actions and the operating handles 108 and 109 for the movement of the cutting tool. However, the processing for the storage of the NC program on the basis of the operation of the teaching switch 106 only supports the actual movement of the cutting tool by the operation of the handles 108 and 109. That is, even if any of the spindle switch 101, the spindle stop switch 102, the coolant switch 103, the coolant stop switch 104 and the tool change switch 105 is pressed for the selection of the related miscellaneous functional action in the course of the teaching work, there is no possibility that the selected miscellaneous functional action is stored in the NC program by the operation of the teaching switch 106.

Accordingly, for the creation of a complete NC program containing the ON/OFF operation of the spindle, the ON/OFF operation of the coolant and the exchange of the tool or the like, it device again for manually inserting commands corresponding to the ON/OFF operation of the spindle, the ON/OFF operation of the coolant and the exchange of the tool or the like into required program positions while checking the NC program, in the stage of completion of the teaching work, that is, after all the NC programs relating to the move path of the machine have been stored in the program memory.

Such inserting work is troublesome, brings about the degradation of efficiency and besides, is in danger of inserting a command in the wrong position or inputting the command itself by mistake.

Further, for the storage of the move path of the machine as the NC program by the operation of the teaching switch 106, it is necessary to store the movement in the process of the operation of the handles 108 and 109 as a move path for one block portion by pressing the teaching switch 106 whenever the handles 108 and 109 are operated once, resulting in a need for a troublesome teaching work.

Besides, the negligence in pressing the teaching switch 106 every operation of the handles 108 and 109 falls into a danger of interference of the cutting tool with the work or the machine at the time of playback.

Such an interference occurs for the reason that the numerical control device generates the NC program of the move path for one block portion on the basis of the positions of the start point and the end point of the move path, that is, the relation between the position of the cutting tool before handle operation and the current position of the cutting tool after handle operation in response to the operation of the teaching switch 106. For instance, when the cutting tool is moved from a position of (x0, z0) to a position of (x2, z2) through a position of (x1, z1), the negligence in pressing the teaching switch 106 at the position of (x1, z1) brings about a phenomenon of the movement of the cutting tool from the position of (x0, z0) directly to the position of (x2, z2) in the stage of playback.

Further, in order to surely avoid the interference caused by the above phenomenon, it is necessary for an operator to divide the move path of the cutting tool into blocks so that interference between the cutting tool and the work or the machine does not occur, in consideration of the move path of the machine, and then press the teaching switch 106, resulting in a complication of the teaching work.

### DISCLOSURE OF THE INVENTION

It is an object of the present invention to provide a numerical control device with teaching playback functions, which can carry out the teaching work for actions inclusive of miscellaneous functional actions such as ON/OFF of spindle rotation and coolant, simultaneously with the teaching work for a move path of a machine, and may not present any problem such as the interference of a tool or the like at the time of playback without a need for the frequent storage of the move path by manual operation, nor a need for the selection of a teaching point on the operator side in consideration of the move path of the machine.

For attaining the above object, a numerical control device with teaching playback functions according to the present invention is provided with a teaching function for manually operating a machine through the numerical control device to store a move path of the machine in the numerical control device as a NC program and a playback function for reproducing the taught move path according to the NC program, and comprises a detecting means for detecting a selective operation for miscellaneous functional actions having no influence on the move path and a storage means for storing a command corresponding to the miscellaneous functional action detected by the detecting means, together with the move path produced by the manual operation of the machine, in the program memory as the NC program.

Preferably, the numerical control device with teaching playback functions according to the present invention temporarily stores both the move path in the manual operation and the miscellaneous functional action selected in the process of the manual operation in a memory means for temporary storage in time series and thereafter, stores the whole of the contents of the memory means for temporary storage in the program memory as the NC program at the final stage of the manual operation.

More preferably, the numerical control device with teaching playback functions according to the present invention divides the move path into blocks by detecting a change of the direction of the move path in the manual operation and then causes the memory means for temporary storage to store each of the divided blocks as an independent move block.

Since the numerical control device with teaching playback functions according to the present invention detects the selective operation for the miscellaneous functional action selected in the process of the manual operation and then stores the detected miscellaneous functional action in the program memory, the teaching work for the miscellaneous functional action such as ON/OFF of the spindle rotation and the coolant, which has been considered to be impossible with the conventional numerical control device, may be carried out simultaneously with the teaching work for the move path of the machine.

Further, since the numerical control device with teaching playback functions according to the present invention temporarily stores both the move path of the machine and the miscellaneous functional action selected in the process of the manual operation in an automatic memory means in time series and then stores the contents of the automatic memory means as the NC program in the program memory in the batch mode in the final stage of the manual operation, it is possible to save the trouble of manually storing the move path in block units.

Moreover, since the numerical control device with teaching playback functions according to the present invention automatically divides the move path into blocks by detecting a change of the direction of the move path in the manual operation and then stores each of the divided blocks as the independent move block in time series, it is not necessary for the operator to determine a teaching point in consideration of the move path of the machine without the occurrence of interference at the time of playback, resulting in a substantial simplification of the operator teaching work.

Furthermore, since the numerical control device with teaching playback functions according to the present invention displays each block of the stored NC program in the program memory on a display in character strings and hieroglyphic figures and edits the displayed block by making use of an editor function of the numerical control device, it is possible to easily modify the program such as to delete or replace any unnecessary or redundant move paths created by the teaching work, resulting in a simple creation of an optimum NC program for playback.

### BRIEF DESCRIPTION OF THE DRAWINGS

Fig. 1 is a block diagram showing an essential part of a numerical control device with teaching playback functions according to one embodiment of the present invention, together with a machine tool (a lathe) driven under control of the numerical control device;
Fig. 2 is a schematic view showing an operating panel of the numerical control device according to the same embodiment;
Fig. 3 is a schematic view showing an illustration of a display of the numerical control device according to the same embodiment;
Figs. 4 to 9 are a series of flow charts schematically showing a teaching process based on the numerical control device according to the same embodiment, respectively; and
Fig. 10 is a schematic view showing an illustration of an operating panel of a conventional numerical control device with teaching playback functions.

### BEST MODE FOR EMBODYING THE INVENTION

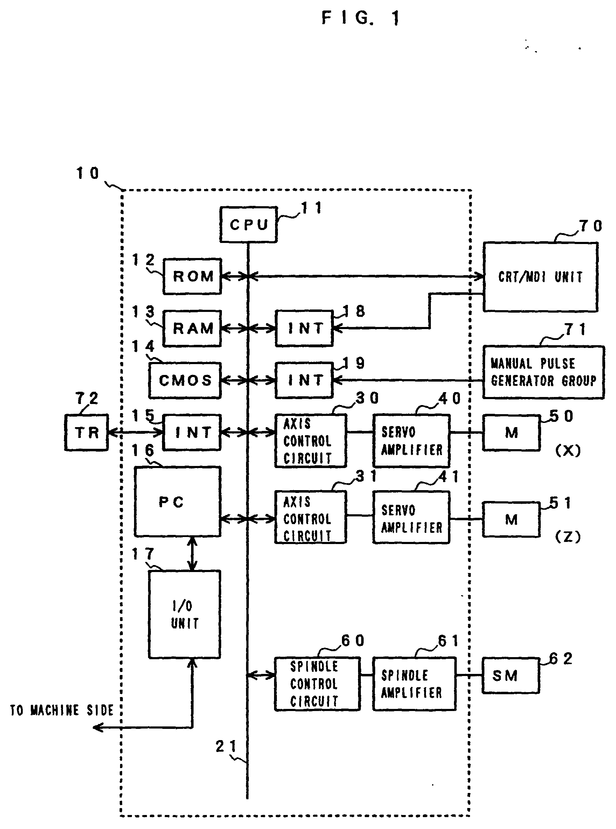

Fig. 1 is a block diagram showing an essential part of a numerical control device 10 with teaching playback functions according to one embodiment of the present invention, together with a machine tool such as a lathe, for instance, driven under control of the numerical control device 10.

A processor 11 reads out a system program stored in a ROM 12 through a bus 21 and controls the entirety of the numerical control device 10 according to the read-out system program. A RAM 13 serves as a memory for temporary storage. A CMOS memory 14 is backed up by a battery (not shown) and functions as a non-volatile memory which holds a storage state even though a power of the numerical control device 10 is turned off.

An external equipment 72 such as a paper tape reader and a paper tape puncher is connected to an interface 15 for the external equipment. An NC program is inputted through the paper tape reader, and the NC program edited in the numerical control device 10 may be also outputted to the paper tape puncher.

A programmable controller 16 controls the machine tool by sequence programs incorporated into the numerical control device 10. That is, the programmable controller performs conversion into a signal required on the machine tool side by these sequence programs according to a function designated by the NC program and outputs the converted signal to the machine tool side through an I/O unit 17. Various actuators on the machine tool side are actuated in response to this output signal. Further, the programmable controller transfers a signal received from a limit switch or the like on the machine tool side to the processor 11 after the necessary processing.

An image signal such as a current position of each axis, alarm, parameters and image data is sent to a manual data input unit with display (CRT/MDI unit) and is displayed on its image screen. An interface 18 transfers data received from a keyboard of the CRT/MDI unit 70 to the processor 11. An interface 19 is connected to a manual pulse generator group 71 composed of three manual pulse generators for X-axis, Z-axis and guidance and receives pulses from these manual pulse generators.

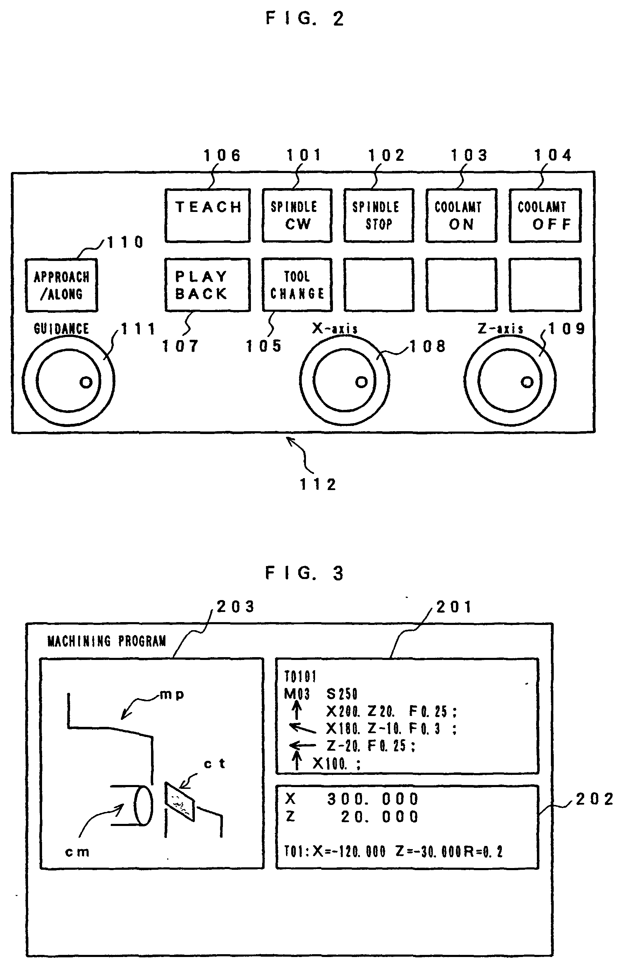

Three manual pulse generators for X-axis, Z-axis and guidance are mounted in an operating panel 112 on the machine tool side as shown in Fig. 2, and an operating handle 108 for X-axis, an operating handle 109 for Z-axis and an operating handle 111 for guidance are respectively mounted to the manual pulse generators.

The operating panel 112 is equipped with a selection switch 110 for the selection of the function of the operating handle 111 for guidance, in addition to a spindle switch 101, a spindle stop switch 102, a coolant switch 103, a coolant stop switch 104, a tool change switch 105, a teaching switch 106 and a playback switch 107 which are similar to those in the conventional device shown in Fig. 10. Signals from these switches are transferred to the processor 11 through the I/O unit 17 and the programmable controller 16.

Axis control circuits 30 and 31 output X-axis and Z-axis move commands received from the processor 11 or pulses received from the X-axis and Z-axis manual pulse generators to servo amplifiers 40 and 41. On the other hand, these servo amplifiers 40 and 41 drive X-axis and Z-axis servo motors 50 and 51 upon receipt of this command. A pulse coder (not shown) for the detection of a potential velocity is incorporated in each of the X-axis and Z-axis servo motors 50 and 51, and feedback signals from these pulse coders are fed back to the axis control circuits 30 and 31. A servo-control CPU incorporated into each of the axis control circuits 30 and 31 performs the processing of position loop, velocity loop and current loop on the basis of both the feedback signals and the move commands described above for controlling the position and velocity of the X-axis and Z-axis servo motors 50 and 51 by obtaining a current command for the final drive control for an individual axis.

A spindle control circuit 60 outputs a spindle speed signal to a spindle amplifier 61 upon receipt of a spindle rotation command and a spindle orientation command or the like. The spindle amplifier 61 rotates a spindle motor 62 at a designated speed of rotation on the basis of the spindle speed signal and a feedback signal from a detector (not shown) which detects the speed of rotation and the position of rotation of the spindle motor 62. Further, the spindle amplifier locates the spindle motor 62 at a predetermined position of rotation according to the orientation command.

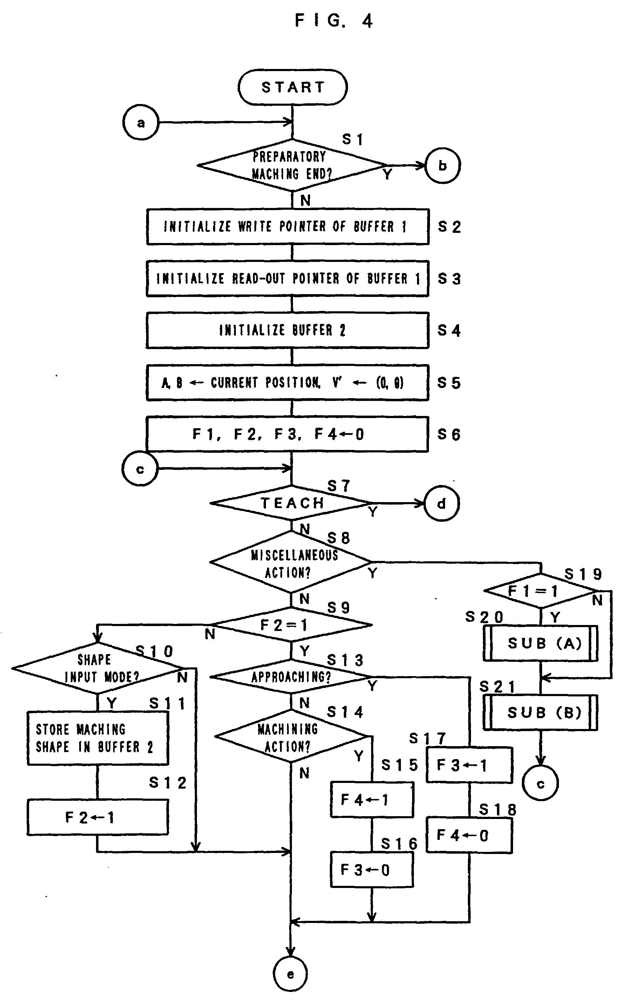

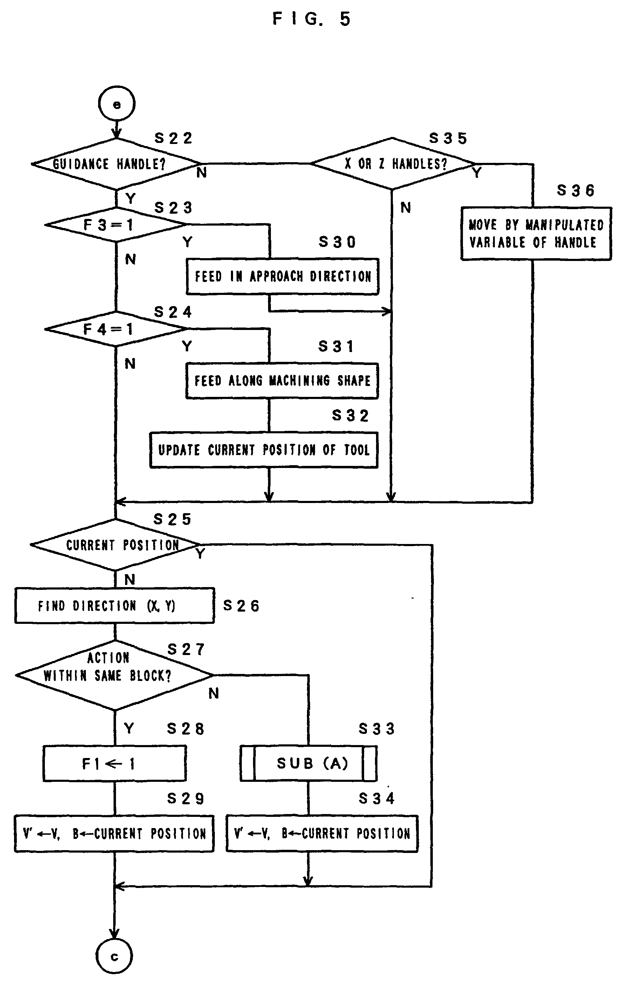

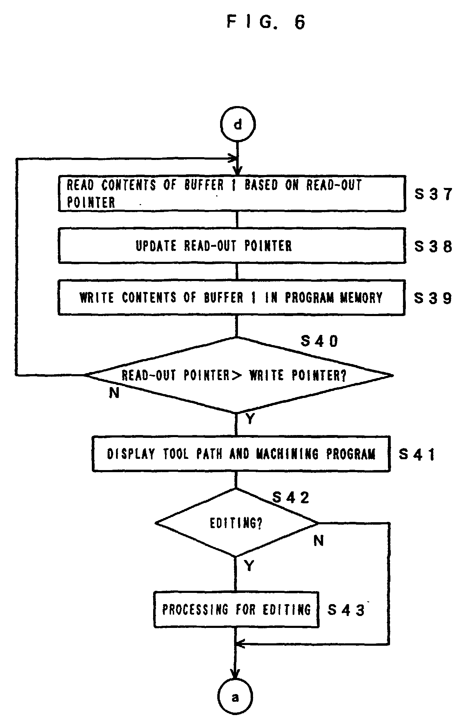

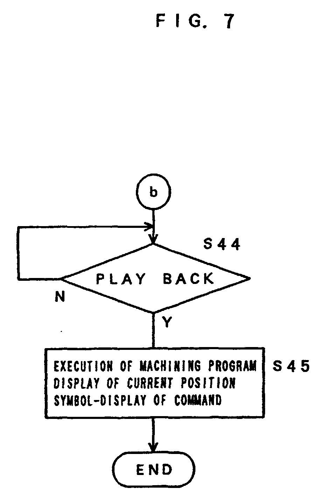

A description will now be given of an outline of a teaching process performed by the processor 11 with reference to flow charts shown in Figs. 4 to 9.

The teaching process is automatically started whenever the function of a teaching mode is selected through the CRT/MDI unit 70 on the operator-side judgment. A description will now be given of the processing required for the processor 11 in the teaching process by taking the case of the teaching work effective in machining a work with a lathe. Incidentally, it is assumed that the work has been already mounted on the end of the spindle in this stage, and all exchangeable cutting took required for machining have been mounted on a tool holder of a turret.

After starting the teaching process, the processor 11 first decides whether or not a preparatory-machining end signal is inputted through the CRT/MDI unit 70 (Step S1). Since an operator inputs this preparatory-machining end signal by operating the CRT/MDI unit 70 in the stage of completion of the teaching work relating to all the machining processes such as roughing, semi-finishing and finishing, there is no possibility that the preparatory-machining end signal is inputted in the stage of start of the teaching process.

Then, the processor 11 initializes a value of a write pointer of a buffer 1 serving as a memory means for temporary storage and also a value of a read-out pointer of the buffer 1 (Steps S2 and S3), initializes the contents of a buffer 2 for the temporary storage of shape data inputted by the operator (Step S4) and initializes a direction storage register V' for the storage of the direction of a move path after reading out the current position of the cutting tool from a current-position storage register of each axis and setting the read-out current position in an end-position storage register A and a last-position storage register B (Step S5).

Further, the processor resets each of a movement-direction storage flag F1, a shape-input storage flag F2, an approach storage flag F3 and a shape-machining storage flag F4 (Step S6).

Subsequently, the processor 11 decides whether or not the teaching switch 106 of the operating panel 112 is pressed (Step S7). However, since the teaching switch 106 is pressed by the operator whenever the teaching work for one machining process such as roughing, semi-finishing and finishing is completed, there is no possibility that the teaching switch 106 is pressed in this stage.

Then, the processor 11 further decides whether or not the switch for the miscellaneous functional action such as the spindle switch 101, the spindle stop switch 102, the coolant switch 103, the coolant stop switch 104 and the tool change switch 105 is pressed (Step S8).

When it is detected through the processing in Step S8 serving as a means for detecting the selected miscellaneous functional action that the switch is pressed, the processor 11 decides whether or not the movement-direction storage flag F1 is set, that is, whether or not the move path of the cutting tool immediately before the operation of pressing any of the switches 101 to 105 for the miscellaneous functional actions has been already stored in the buffer 1 (Step S19).

As will be described later in detail, in the embodiment, since the move path of the cutting tool is divided into blocks by detecting a change of the direction of the move path, and each of the divided blocks is stored as an independent move block in the buffer 1 in sequence, the move path of the cutting tool is not stored in the buffer 1 unless the change of the direction of the move path is detected, and the movement-direction storage flag F1 is reset whenever the move path for one block portion is newly stored in the buffer 1, whereas the set state of the movement-direction storage flag is held while the movement of the cutting tool is maintained in the same direction.

Accordingly, when the decision in Step S19 results in truth, that is, when any of the switches for the miscellaneous functional actions such as the spindle switch 101, the spindle stop switch 102, the coolant switch 103, the coolant stop switch 104 and the tool change switch 105 is pressed while the movement of the cutting tool is maintained in the same direction, it is necessary to take steps of finding a move path of the cutting tool corresponding to a section from the end position of the preceding divided path to the current position of the cutting tool at the time of the present operation of the switch for the miscellaneous functional action and then storing the found move path in the buffer 1 in the stage prior to the storage of the operation of the switch for the miscellaneous functional action.

In this connection, when the decision in Step S19 results in truth, the processor 11 performs the processing of SUB(A) shown in Step S20 for finding the move path of the cutting tool corresponding to a section from the end position of the preceding divided path to the current position of the cutting tool at the time of the operation of the switch for the miscellaneous functional action and then storing the found move path in the buffer 1.

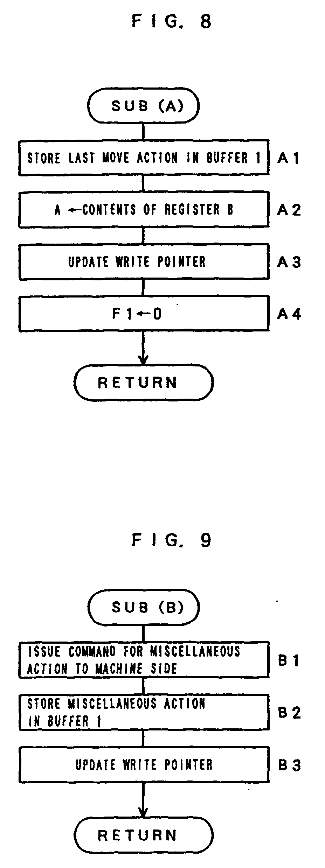

Fig. 8 shows the details of the processing of SUB (A). The processor 11 first finds the move path of the cutting tool corresponding to the section from the end position A of the preceding divided path to the current position B of the cutting tool at the time of the operation of the switch for the miscellaneous functional action on the basis of the relation between the cutting-tool current position expected to be stored in the last-position storage register B, which will be later described, and the preceding divided-path end position having been stored in the end-position storage register A, stores the found move path in the buffer 1 according to addressing of the write pointer (Step A1) and renews the contents of the end-position storage register A with the cutting-tool current position to be stored in the last-position storage register B, that is, the end position of the newly stored divided path this time (Step A2). Then, the processor stores the subsequent divided path in the buffer 1 or the write address of the command corresponding to the miscellaneous functional action by incrementing a value of the write pointer (Step A3) and resets the movement-direction storage flag F1 (Step A4).

That is, even in case where the cutting tool has been moved in the exactly same direction, when the switch for the miscellaneous functional action is pressed in the course of the movement of the cutting tool, the move path of the cutting tool is automatically divided by the cutting-tool position corresponding to the time of the operation of the switch, and the move path of the cutting tool corresponding to the section from the end position of the preceding divided path to the current position of the cutting tool at the time of the operation of the switch for the miscellaneous functional action is automatically stored in the buffer 1 (as the subsequent divided path).

Incidentally, when the decision in Step S19 results in falsity because the movement-direction storage flag F1 is reset, it means that the move path to the position corresponding to the time of operation of the switch for the miscellaneous functional action has been already stored in the buffer 1, and as a result, there is no need for the processing in Step S20 again.

After the completion of the processing in Step S19 or 20, the processor 11 subsequently performs the processing of SUB (B) shown in Step S21 for performing the processing corresponding to the miscellaneous functional action detected through the processing in Step S8 described above, while storing the command corresponding to the detected miscellaneous functional action in the buffer 1.

Fig. 9 shows the details of the processing of SUB (B). The processor 11 first issues a command corresponding to the switch for the selected miscellaneous functional action such as ON/OFF of the spindle motor, for instance, to the machine side (Step B1), stores a command corresponding to the issued command in the buffer 1 according to addressing of the write pointer (Step B2) and stores the subsequent divided path in the buffer 1 or the write address of the command corresponding to the miscellaneous functional action by incrementing a value of the write pointer (Step B3).

Then, the processor 11 proceeds to the processing in Step S7 to start the processing for detecting the switch operation and the handle operation or the like again in the manner similar to the above.

On the other hand, when the decision in Step S8 results in falsity because the detection of the switch operation for the miscellaneous functional action has not been detected, the processor 11 further decides whether or not the shape-input storage flag F2 is set, that is, whether or not the shape has been already inputted to the buffer 2 by the operator in this stage (Step S9).

Then, when the shape has not been inputted to the buffer 2, that is, when the shape-input storage flag F2 has not been set, input of the shape to the buffer 2 by the operator is allowed again.

In this case, when the operator selects a shape input mode by operating the CRT/MDI unit 70, any one of contours including roughing shape, semi-finishing shape and finishing shape for a work to be machined may be generated by means of input of numerical values or the like from the keyboard of the CRT/MDI unit 70, and the generated contour may be set in the buffer 2.

The work of setting the contour of the machining shape in the buffer 2 is not always required for the teaching work in the lathe, and as a matter of course, it is possible to accomplish the teaching work for all the machining processes only by the operation of the operating handle 108 for X-axis and the operating handle 109 for Z-axis. However, the work of preliminarily setting the contour of the machining shape in the buffer 2 makes it possible to simplify a part of the teaching work.

For the utilization of this function, it is necessary for the operator to select the shape input mode by operating the CRT/MDI unit 70 for setting, in the buffer 2, the contours of roughing shape, semi-finishing shape, finishing shape and the like for the work to be machined by making use of input of the numerical values or the like from the keyboard, in the desired stage before the cutting tool is brought into contact with the work.

When the shape input mode is selected, the decision in Step S10 results in truth (Y), and therefore, the processor 11 accepts the operator shape-input operation to store the contour of the machining shape in the buffer 2 (Step S11) and sets the shape-input storage flag F2 (Step S12).

When it is decided through the processing in Step S9 that the shape-input storage flag F2 is set, that is, when it is decided that input of the shape to the buffer 2 has been already carried out by the operator, the use of the contour data of the machining shape stored in the buffer 2 enables the simplified approaching or cutting feed of the cutting tool. Thus, the processor 11 further needs to decide whether the function selected by the selection switch 110 is approaching function or shape machining function of the operating handle 111 for guidance (Steps S13 and S14).

When the approaching function is selected, the processor 11 sets the approach storage flag F3 and resets the shape-machining storage flag F4 (Steps S17 and S18). On the other hand, when the shape machining function is selected, the processor sets the shape-machining storage flag F4 and resets the approach storage flag F3 (Steps S15 and S16).

That is, for simplified approaching or cutting feed of the cutting tool, it is essential that the contour data of the machining shape should be stored in the buffer 2, and when no contour data is stored, the processor 11 does not refer to the set state of the selection switch 110 (See Step S9). Accordingly, the approach storage flag F3 or the shape-machining storage flag F4 is set only in the case where the contour data of the machining shape is stored in the buffer 2 so that the shape-input storage flag F2 is set.

As described above, the operator may freely decide whether or not the contour of the machining shape should be set in the buffer 2, and when the contour of the machining shape is to be set in the buffer 2, the contour of the machining shape may be set in the buffer 2 in the desired stage before the cutting tool is brought into contact with the work.

After the completion of the processing in Steps S12, S10 (result of decision: N), S14 (result of decision: N) and S16 or S18, the processor 11 subsequently decides whether or not the operating handle 111 for guidance is operated (Step S22).

The operating handle 111 for guidance is available for the approaching or the cutting feed of the cutting tool by making use of the contour data of the machining shape stored in the buffer 2.

When the operating handle 111 for guidance is operated, the processor 11 first decides whether or not the approach storage flag F3 is set (Step S23), and also decides whether or not the shape-machining storage flag F4 is set (Step S24). When the approach storage flag F3 is set, the processor finds a vector in a direction (an approach direction) normal to the work on the basis of the contour data of the machining shape stored in the buffer 2, calculates a ratio of distribution of move command pulses to the X-axis and Z-axis servo motors 50 and 51 and distributes the move command pulses to the X-axis and Z-axis servo motors 50 and 51 according to the manipulated variable of the operating handle 111 for guidance to move the cutting tool so as to come closer to the work for cutting (or so as to go away from the work) (Step S30).

The normal rotation of the operating handle 111 for guidance allows the movement of the cutting tool so as to come closer to or so as to go away from the work.

When the shape-machining storage flag F4 is set, the processor 11 calculates the ratio of distribution of move command pulses to the X-axis and Z-axis servo motors 50 and 51 on the basis of the contour data of the machining shape stored in the buffer 2 and the current position of the cutting tool on the contour data and distributes the move command pulses to the X-axis and Z-axis servo motors 50 and 51 according to the manipulated variable of the operating handle 111 for guidance to move the cutting tool for cutting along the contour data of the machining shape (Step S31). Then, the processor renews the current position of the cutting tool on the contour data (Step S32).

As described above, when the operating handle 111 for guidance is operated under the state where the flag F4 is set and the shape machining function is selected, the cutting tool is always moved along the contour data of the machining shape. Thus, basically, an operator should make the current position of the cutting tool coincident with the machining start point of the contour data of the machining shape in advance, by making use of the approaching function described above or by operating the operating handle 108 for X-axis or the operating handle 109 for Z-axis, and operate the operating handle 111 for guidance.

When neither the approach storage flag F3 nor the shape-machining storage flag F4 is set, the operation of the operating handle 111 for guidance is ignored.

On the other hand, when the decision in Step S22 results in falsity because the operation of the operating handle 111 for guidance is not detected, the processor 11 decides whether or not the operating handle 108 for X-axis or the operating handle 109 for Z-axis is operated (Step S35). When either of the operating handles is operated, the processor distributes the move command pulses to the X-axis or Z-axis servo motor 50 or 51 according to the manipulated variable of the operated handle to move the cutting tool (Step S36).

After the completion of the processing in Steps S24 (result of decision: N), S32, S30 and S35 (result of decision: N) or S36, the processor 11 subsequently reads out the current position of the cutting tool from the current-position storage register of each axis to compare the read-out current position of the cutting tool with a current value of each axis in the last-position storage register B and decides whether or not the cutting tool is moved through the processing in Steps S32 and S30 or S36 (Step S25).

In this case, it is decided that no movement of the cutting tool occurs if the cutting-tool current position read out from the current-position storage register of each axis agrees with the current value of each axis in the last-position storage register B, whereas it is decided that there is the movement of the cutting tool if a difference between the both is found.

When the movement of the cutting tool is detected through the processing for decision in Step S25, the processor 11 first finds a direction vector of the direction V (X, Z) of movement according to the present handle operation on the basis of the cutting-tool current position read out from the current-position storage register of each axis and the current value of each axis in the last-position storage register B (Step S26) and decides whether or not the found direction vector agrees with a value in the direction storage register V' by comparison, that is, whether or not the direction of movement of the cutting tool according to the present handle operation agrees with the direction of movement of the cutting tool according to the preceding handle operation (Step S27).

However, when a required value for comparison in the direction storage register V' is an initial value V'= (0, 0), V is regarded as a value equal to V', irrespectively of the value of V. Such mode of decision is carried out only when the handle is first operated.

When the direction V of movement according to the present handle operation agrees with the direction V' of movement according to the preceding handle operation, the processor 11 sets the move-direction storage flag F1 to store the fact that the direction of movement according to the preceding handle operation agrees with the direction of movement according to the present handle operation (Step S28), renews the value in the direction storage register V' with the value in the direction storage register V and also renews the current value of each axis in the last-position storage register B with the value in the current-position storage register of each axis (Step S29).

Incidentally, although it is decided through the processing in Step S27 that the value of V' is equal to the value of V, the value V' is renewed to V for the reason that the direction of movement resulting from the first handle operation needs to be stored in the register V' to substitute for the value (0, 0):

Further, when the decision in Step S27 results in falsity because the direction V of movement of the cutting tool according to the present handle operation does not agree with the direction V' of movement of the cutting tool according to the preceding handle operation, it means that the direction of movement of the cutting tool is changed, and therefore, the processor 11 performs the processing of SUB (A) described above for finding the move path of the cutting tool from the end position A of the preceding divided path to the last position serving as a direction change point on the basis of the relation between the cutting-tool last position read out from the last-position storage register B and the end position of the preceding divided path stored in the end-position storage register A, then stores the found move path in the buffer 1 according to addressing of the write pointer and renews the contents of the end-position storage register A with the contents to be stored in the last-position storage register B (that is, with the end position of the divided path newly stored this time). Then, the processor stores the subsequent divided path in the buffer 1 or the write address of the command for the miscellaneous functional action by incrementing a value of the write pointer, and resets the movement-direction storage flag F1 (Step S33).

Further, the processor renews the value in the direction storage register V' with the value in the direction storage register V and also renews the current value of each axis in the last-position storage register B with the value in the current-position storage register of each axis (Step S34).

When no movement of the cutting tool is detected through the processing for decision in Step S25, the processing in Steps S26 to S29, S33 and S34 are not executed.

After the completion of the processing in Steps S29 and S34 or S25 (result of decision: Y), the processor 11 transfers the processing to Step S7 again to start the processing of detecting the switch operation and the handle operation or the like in the manner similar to the above.

The teaching work relating to each of the machining processes such as roughing, semi-finishing and finishing is carried out by the processing on the side of the processor 11 in Steps S1 to S36 described above and the operation of various switches 101, 102, 103, 104, and 105 for the miscellaneous functional actions on the operator side, together with the operation of the operating handles 108, 109 and 111 and the selection switch 110.

A description will now be simply given as to how the result of these operations are automatically stored in the buffer 1.

First, the operation of various switches for the miscellaneous functional actions such as the spindle switch 101, the spindle stop switch 102, the coolant switch 103, the coolant stop switch 104 and the tool change switch 105 is detected by the processor 11 through the processing for decision in Step S8, and the detected operation is then stored in the buffer 1 through the processing in Step S21, that is, SUB (B).

When the operation of these switches for the miscellaneous functional actions is detected in the course of the movement of the cutting tool in the same direction, the set state of the movement-direction storage flag F1 is detected through the processing for decision in Step S19 subsequent to the processing for decision in Step S8, the processor 11 automatically divides the move path of the cutting tool at the position where the cutting-tool position is when the operation of the switch for the miscellaneous functional action is detected, and stores the move path of the cutting tool up to that time in the buffer 1, through the processing in Step S20, that is, SUB(A), and then performs the processing in Step S21, that is, SUB(B), to store the operation of the switches for the miscellaneous functional actions in the buffer 1.

Incidentally, when a plurality of switches for the miscellaneous functional actions are pressed in succession without moving the cutting tool, the processing of SUB (B) in Step S21 is performed in a repetitive manner every time the switch for the miscellaneous functional action is pressed, and the selective operation for the above switches is stored in the buffer 1 in time series.

Further, the movement of the cutting tool according to the operation of the operating handle 108 for X-axis and the operating handle 109 for Z-axis and the movement of the cutting tool according to the operation of the operating handle 111 for guidance are detected through the processing for decision in Step S25 respectively, and the direction V of movement of the cutting tool according to the present handle operation is compared with the direction V' of movement of the cutting tool according to the preceding handle operation through the processing in Steps S26 and S27. Then, only when a change in the direction of movement of the cutting tool is detected, the move path of the cutting tool is divided automatically at the present direction change point, then, the move path from the end position of the preceding divided path to the current position of the cutting tool is found through the processing in Step S33, that is, SUB (A), and the found move path is stored in the buffer 1 as a move path for one block portion.

Thus, differently from the conventional device, there is no need for the manual operation of storing the move path for one block portion by pressing the teaching switch 106 every time the handles 108 and 109 are operated once, nor for the work of dividing the move path of the cutting tool by determining the teaching point by the operator oneself in consideration of the interference or the like of the cutting tool at the time of playback. Further, the teaching work relating to the operation of the switches for the miscellaneous functional actions, which has been considered to be impossible in the conventional device, may be carried out simultaneously with teaching of the move path of the cutting tool.

The processing for the detection of movement of the cutting tool according to the handle operation and its accompanying processing for the storage of the move path may be carried out in the exactly same manner in Steps S25 to S29, S33 and S34, even though the movement of the cutting tool is based on the operation of the operating handle 108 for X-axis and the operating handle 109 for Z-axis or the operation of the operating handle 111 for guidance.

That is, a move path to be stored in the buffer 1 is an actual move path of the cutting tool, even though the cutting tool is moved in the direction normal to the work on the basis of the work contour data stored in the buffer 2 as the result of operating the operating handle 111 for guidance under the state where the approaching function is selected by the selection switch 110 (Step S30), even though the cutting tool is moved along the contour data while referring to the work contour data stored in the buffer 1 as the result of operating the operating handle 111 for guidance under the state where the shape-machining operating function is selected by the selection switch 110 (Step S31), or even though the operator operates the operating handle 108 for X-axis and the operating handle 109 for Z-axis quite freely to move the cutting tool (Step S36).

That is because data in the current-position storage registers for X-axis and Z-axis are referred to whenever the move path is calculated in the processing of Step S33 or S20.

Accordingly, for the whole cutting work, the move path in the teaching work may be stored in the buffer 1 by manually operating the operating handle 108 for X-axis and the operating handle 109 for Z-axis without setting the contour data in the buffer 2 in advance. Alternatively, it may be possible to store the move path in the teaching work in the buffer 1 by setting the contour data in advance in the buffer 2, arbitrarily combining a semiautomatic operation resulting from a combination of the selection switch 110 and the operating handle 111 for guidance, that is, the shape-machining function and the approaching function, and a complete manual operation based on the operating handle 108 for X-axis and the operating handle 109 for Z-axis, and then carrying out teaching work by sufficiently making use of these functions.

A description will now be given of the desirable teaching work utilizing the shape machining function and the approaching function. Incidentally, it is assumed that the contour data required for machining has been already set in the buffer 2, and the cutting tool has been retreated to a position of safety on condition that the work is mounted on the spindle.

Firstly, the operator presses the spindle switch 101 to start the rotation of the spindle, that is, the work, then presses the coolant switch 103 to start the feed of lubricating coolant and presses the tool change switch 105 after the selection of a required cutting tool to actuate an automatic tool exchanging unit for mounting the required cutting tool on a tool rest. The operation of the switches related to these miscellaneous functional actions is detected in turn through the processing for decision in Step S8, and the detected operation is stored in the buffer 1 in time series through the processing of SUB(B) in Step S21.

Secondly, the operator operates the operating handle 108 for X-axis and the operating handle 109 for Z-axis to move the cutting tool close to the work, preferably, to the machining start point of the contour data of the machining shape.

The final approaching operation may be performed by selecting the approaching function by the selection switch 110 and operating the operating handle 111 for guidance. In this case, the final approaching is limited to the direction normal to the work. As described above, when the direction of movement of the cutting tool is changed because the cutting tool is moved by operating the operating handle 108 for X-axis and the operating handle 109 for Z-axis or by making use of the approaching function, the move path up to the change point of the direction of movement is automatically separated as a move path for one block portion and is then stored in the buffer 1 through the processing in Steps S25 to S29, S33 and S34 described above.

Then, when the approaching is completed, the operator starts practical cutting after adjusting the amount of cut.

Cutting is carried out in the state where only the operating handle 108 for X-axis and the operating handle 109 for Z-axis are used, or in the state where the shape machining function and the approaching function are used together. In case of cutting by the use of only the operating handle 108 for X-axis and the operating handle 109 for Z-axis, it may be sufficient to move the cutting tool along the work while maintaining a certain amount of cut by operating the operating handle 108 for X-axis in cooperation with the operating handle 109 for Z-axis while adjusting the amount of cut by eye measurement, and the move path of the cutting tool, produced during that time, is stored in turn in the buffer 1 in the manner similar to that in case of the approaching.

A description will now be given of the operation where cutting is performed by the use of the shape-machining function together with the approaching function or the like.

In case of cutting by the use of the shape-machining function together with the approaching function, the operator presses the selection switch 110 (Step S14) in the stage of completing the approaching operation described above and the adjustment of the amount of cut and changes the mode of the operating handle 111 for guidance to the shape machining function by setting the flag F4 (Step S15).

Accordingly, when the operating handle 111 for guidance is operated in this state, the processing in Step S31 is performed according to the manipulated variable of the operating handle 111, and as a result, the cutting tool is moved according to the contour data of the work. However, even though the cutting tool is moved according to the contour data of the work, the excessive or deficient cutting may be caused due to a difference between the contour data and the actual shape in the course of the movement of the cutting tool according to the contour data, dependent upon the material or the shape of the mounted work, resulting in a hindrance in cutting. Also, the operator sometimes may find out the deficiency in first setting of the amount of cut in the course of the movement of the cutting tool.

When such a case occurs, the operator presses the selection switch 110 again to change the mode of the operating handle 111 for guidance to the approaching function (Step S13) and then manipulates the operating handle 111 for guidance to rush the cutting tool into the work or retreat the cutting tool from the work through the processing in Step S30 by operating the operating handle 111 for guidance, and after solving the excessive or deficient cutting by readjusting the amount of cut, presses the selection switch 110 again to change the mode of the operating handle 111 for guidance to the shape machining function (Step S14), and moves the cutting tool according to the contour data of the work.

Incidentally, instead of adjusting the amount of cut by the use of the approaching function, it is possible to operate the operating handle 108 for X-axis and the operating handle 109 for Z-axis for the adjustment of the amount of cut through the processing in Step S36. The switching of the mode of the operating handle 111 for guidance is not necessary for the adjustment of the amount of cut by operating the operating handle 108 for X-axis and the operating handle 109 for Z-axis.

When a problem relating to the amount of cut or the like occurs again during the movement of the cutting tool according to the contour data of the work, it may be only sufficient to readjust the amount of cut by repeating the operation similar to the above-described operation by making use of the approaching function or the operating handle 108 for X-axis and the operating handle 109 for Z-axis.

As described above, as long as the shape machining function is used for the movement of the cutting tool according to the contour data of the work, there is no need for a cooperative the operation of the operating handle for X-axis and the operating handle 109 for Z-axis, which would be required in the case of the complete manual operation, and it is only necessary for the operator to select the approaching function when adjustment of the amount of cut or the like is required, or correct a slight error by operating the operating handles 108 and 109. In particular, the shape machining function is suitable for a less-skilled operator to carry out the teaching work.

As described above, when the direction of movement of the cutting tool is changed, irrespectively of the manner with which the cutting tool moves, the move path up to the change point of the direction of movement is automatically separated as the move path for one block portion and is then stored in the buffer 1 through the processing in Step S25 to S29, S33 and S34, and as a result, the operations carried out by the operator in the process of the cutting work, that is, the movement of the cutting tool and the operation of various switches are all stored in the buffer 1 in time series.

Then, in the stage of completion of the teaching work for one machining process such as roughing, for instance, the operator operates the operating handle 108 for X-axis and the operating handle 109 for Z-axis or the operating handle 111 for guidance set in the approach mode to retreat the cutting tool to a position of safety, presses the spindle stop switch 102 to stop the rotation of the work and presses the coolant stop switch 104 to stop the feed of the lubricating coolant.

The retreating action of the cutting tool and the operation of the spindle stop switch 102 and the coolant stop switch 104 are also stored in the buffer 1 in time series in the manner similar to the above.

When the operator presses the teaching switch 106 on the operating panel 112 after the completion of the teaching work for one machining process, the processor 11 detects the operation of this switch through the processing for decision in Step S7, reads the move path of the cutting tool for one block portion or the command corresponding to the miscellaneous functional action for one block portion from the buffer 1 on the basis of the value of the read-out pointer initialized through the processing in Step S3 (Step S37) and stores the value of the subsequent reading address in the buffer 1 by incrementing the value of the read-out pointer (Step S38). Then, the processor 11, serving as the storing means, stores the read-out move path of the cutting tool for one block portion or the read-out command of the miscellaneous functional action for one block portion, read from the buffer 1 through the processing in Step S37, in the program memory such as the CMOS memory 14 as the NC program for one block portion (Step S39).

Subsequently, the processor 11 decides whether or not the value of the read-out pointer exceeds the final value of the write pointer (Step S40). When not exceed, the processor transfers the processing to Step S37 again to repeat the processing similar to the above for reading the move path of the cutting tool for the subsequent one block portion or the command corresponding to the miscellaneous functional action for the subsequent one block portion from the buffer 1 on the basis of the value of the read-out pointer incremented through the processing in Step S38, and thereafter stores the read-out move path or the read-out command in the program memory such as the CMOS memory 14 as the NC program for one block portion in sequence.

When it is detected through the processing for decision in Step S40 that the value of the read-out pointer exceeds the final value of the write pointer after the completion of the storage of the final move path or the final miscellaneous functional action command stored in the buffer 1, the processor 11 completely finishes the storage of teaching data corresponding to one machining process and displays the NC program corresponding to one machining process on the screen of the CRT/MDI unit 70 (Step S41).

Fig. 3 shows an illustration of the NC program in the display of the CRT/MDI unit 70.

As shown in Fig. 3, in a NC program display area 201 on the upper right of the screen, a movement program for one block portion and T and M commands or the like representing the miscellaneous functional actions are displayed as the NC program in character strings in a line-feed mode on a block-by-block basis. Also, hieroglyphic figures such as an up arrow and a left arrow representing the direction of movement of the cutting tool to be carried out by the block are displayed at the top of the movement program. Further, in a position information display area 202 on the lower right of the screen, the current position or the like of the cutting tool is displayed in the form of numerical values. Moreover, in a move path display area 203 on the left of the screen, the whole of a move path mp of the cutting tool for one machining process is displayed, in addition to a tool symbol ct representing the current position of the cutting tool and a miscellaneous action function symbol cm representing the function of the miscellaneous action to be carried out according to the position of the cutting tool.

The NC program generated in this manner is not always optimized as the NC program for automatic control, because it is created by strictly regenerating the teaching work according to the manual operation as it is.

For instance, when the operator has difficulty in positioning the cutting tool or adjusting the amount of cut or the like to cause the reciprocation of the cutting tool almost in the same place, disadvantage of storing all the actions including the reciprocation as the NC program occurs in some cases.

To be with the above disadvantage, the editor function of the numerical control device is started (Step S2) and editing work is carried out while making reference to the NC program display area and the move path display area or the like on the screen(Step S43). For instance, effective is an editing work such as deleting the whole of blocks corresponding to the continuously redundant reciprocating action as the useless blocks or inserting a movement program for one block, instead of the useless blocks.

After the completion of the above processing, the processor 11 transfers the processing to Step S1 again and decides whether or not the preparatory-machining end signal is inputted through the CRT/MDI unit 70.

If only the teaching work for one machining process is to be carried out, the operator manipulates the CRT/MDI unit 70 to input the preparatory-machining end signal in this stage.

When the teaching work for the machining processes such as semi-finishing and finishing is required in succession, the operator causes the processor 11 to perform the initialization in Steps S2 to S6 in the manner similar to the above without inputting any preparatory-machining end signal in this stage and thereafter, causes the processor 11 to repeatedly perform the following processing in Steps S7 to S36 in the manner similar to the above, so that the move path relating to the approaching, the cutting and the retreating of the cutting tool for the subsequent machining process is stored in the initialized buffer 1, and the command corresponding to the miscellaneous functional action to be carried out in the process of the above action is stored in time series.

Then, as long as the teaching switch 106 is pressed in the stage of completion of the teaching work in the above machining process, the processing in Steps S37 to S43 is repeatedly performed in the manner similar to the above to store the program of the above machining process in the program memory such as the CMOS memory 14 as a different new NC program. When there is a need for other machining processes requiring teaching, the processing on and after Step S1 is further repeatedly performed in the manner similar to the above to create an NC program for each machining process required.

When the operator finally manipulates the CRT/MDI unit 70 to input the preparatory-machining end signal after the completion of the teaching work relating to all the required machining processes, the processor 11 detects this manipulation through the processing for decision in Step S1 and is placed in the wait state until the playback switch 107 is pressed by the operator (Step S44).

When the playback switch 107 is pressed, the processor 11 reads out the NC program for one machining process from the program memory such as the CMOS memory 14 according to the order of the predetermined machining processes such as roughing, semi-finishing and finishing and performs the feed action for one block portion along the move path such as approaching, cutting and retreating and the commands corresponding to the miscellaneous functional actions such as ON/OFF of the spindle, ON/OFF of the coolant and the exchange of the tool from the foremost block of the NC program.

In this case, on the screen of the CRT/MDI unit 70, the program displayed in the NC program display area 201 is scrolled upwards a line-by-line basis every time the NC program for one block is executed, and the current position of each axis is updated according to the current position of the cutting tool and is displayed in the position-information display area 202 on the lower right of the screen. In the move path display area 203 of the screen, the tool symbol ct (that is, a symbol of a taught tool command TO101) is moved in response to the movement of the cutting tool, and the move path where the cutting tool has passed is displayed in a different color, while the miscellaneous action function symbol cm (that is, a symbol of the taught spindle commands MO3, S250) is displayed next the tool symbol, that is, in correspondence to the current position of the cutting tool at that time, every time the function of the miscellaneous action is performed. Incidentally, a cylindrical figure illustrated in Fig. 3 represents a symbol of the function of the miscellaneous action corresponding to spindle ON. (The foregoing is the processing in Step S45).

Incidentally, the above playback action can be re-executed not only immediately after the completion of the teaching work, but also at any time by designating the NC program for the machining process such as roughing, semi-finishing and finishing and then invoking the designated NC program from the program memory such as the CMOS memory 14.

## Claims

1. A numerical control device with teaching playback functions including with a teaching function for manually operating a machine through the numerical control device to store a move path of the machine in the numerical control device as a NC program and a playback function for reproducing the taught move path according to the NC program, comprising:
a detecting means for detecting a selective operation for miscellaneous functional actions having no influence on the move path; and
a storage means for storing a command corresponding to the miscellaneous functional action detected by said detecting means, together with the move path produced by the manual operation of said machine, in the program memory as the NC program.

2. A numerical control device with teaching playback functions according to claim 1, wherein the command corresponding to the miscellaneous functional action detected by said detecting means and the move path produced by the manual operation of said machine are temporarily stored in a memory means for temporary storage according to the time order, and said storing means reads out the whole of the contents of said memory means for temporary storage therefrom and stores the read-out contents in the program memory as the NC program.

3. A numerical control device with teaching playback functions according to claim 2, wherein it further comprises:
a path direction-change detecting means for detecting a change of the direction of the move path based on said manual operation; and
a move-path dividing means for dividing the move path whenever said path direction-change detecting means detects that the direction of the move path is changed;
wherein each of the move paths divided by said move-path dividing means is stored in said memory means for temporary storage.

4. A numerical control device with teaching playback functions according to claim 1, 2 or 3, wherein it further comprises:
a means for displaying each block of the NC program stored in said program memory on the display in character strings and hieroglyphic figures; and
an editing means for editing the NC program stored in said program memory.

5. A numerical control device with teaching playback functions according to claim 3, wherein it further comprises:
a machining-shape memory means for storing a machining shape; and
a function selecting means for causing the tool to selectively carry out the first action in which the tool moves so as to come closer to or go away from a work according to the machining shape stored in said machining-shape memory means and a second action in which the tool moves according to the machining shape; and
an operating handle for guidance capable of moving the tool by manual operation when either of said first action and said second action is selected by said function selecting means.

6. A numerical control device, comprising:
a tool-movement instructing means capable of operating the movement of a tool to a work;
a miscellaneous-function instructing means capable of selectively instructing various functions other than the operation for the movement of said tool;
a first move-path defining means for automatically defining, when it is detected that said miscellaneous-function instructing means is selectively operated in the course of the movement of the tool by said tool-movement instructing means, the move path of the tool for one block portion having an end point placed on the tool position corresponding to the time of said detection;
a tool movement direction-change detecting means for detecting, when said tool-movement instructing means is operated, whether or not the direction of movement of the tool based on the operation is different from the direction of movement of the tool based on the preceding operation of said tool-movement instructing means;
a second move-path defining means for automatically defining, when said tool movement direction-change detecting means detects that the direction of movement of the tool is changed, the move path of the tool for one block portion having an end point placed on the tool position corresponding to the time of said detection;
a memory means for storing a block defined by said first move path defining means, a block for a command of the selectively operated miscellaneous-function instructing means, and a block defined by said second move-path defining means, according to time order of said blocks; and
a means for creating a NC program by reading the contents stored in said memory means in turn block by block.

7. A numerical control device according to claim 6, wherein said tool-movement instructing means includes a first manual handle for moving the tool to the work in the first direction and a second manual handle for moving the tool in the second direction different from said first direction.

8. A numerical control device according to claim 7, further comprising:
a contour-data memory means for storing contour data related to the machining shape of the work;
wherein said tool-movement instructing means includes a first operating means for automatically moving the tool according to the work contour data stored in said contour-data memory means, in addition to said first and second manual handles.

9. A numerical control device according to claim 8, further comprising:
a second operating means for moving said tool so as to come closer to or go away from said work on the basis of the work contour data stored in said contour-data memory means.

10. A numerical control device according to claim 6, wherein said work includes an object to be cut mounted on a spindle of a lathe controlled by the numerical control device, and said tool includes a cutting tool for cutting said object to be cut.

11. A numerical control device according to claim 10, wherein various functions instructed by said miscellaneous-function designating means, other than the operation for the movement of the tool, include at least one of a spindle start switch, a spindle stop switch, a coolant start switch, a coolant stop switch and a tool change switch.
